# EUROPÄISCHE PATENTSCHRIFT

(11) **EP 2 930 063 B1**
(45) Veröffentlichungstag und Bekanntmachung des Hinweises auf die Patenterteilung: **26.02.2020**
(21) Anmeldenummer: 15160807.2
(22) Anmeldetag: 25.03.2015
(51) Int. Cl.: F21S 43/19, F21S 43/14, F21S 43/237, F21S 43/249, F21S 45/47, F21S 45/48, B60Q 1/38, B60Q 1/26

(54) **BLINKEREINHEIT FÜR EINE EINRICHTUNG ZUR INDIREKTEN SICHT EINES FAHRZEUGS UND EINRICHTUNG ZUR INDIREKTEN SICHT MIT EINER BLINKEREINHEIT**
FLASHER UNIT FOR A DEVICE FOR INDIRECT VIEW OF A VEHICLE AND DEVICE FOR INDIRECT VIEW WITH A FLASHER UNIT
UNITÉ DE CLIGNOTANT POUR UN DISPOSITIF DE VUE INDIRECTE D'UN VÉHICULE ET DISPOSITIF DE VUE INDIRECTE DOTÉ D'UNE UNITÉ DE CLIGNOTANT

(30) Priorität: 09.04.2014 DE 102014005610
(43) Veröffentlichungstag der Anmeldung: 14.10.2015
(73) Patentinhaber: MEKRA LANG GmbH & Co. KG, 91465 Ergersheim (DE)
(72) Erfinder: Lang, Werner, 91465 Ergersheim (DE); Finkenberger, Elmar, 91587 Adelshofen (DE); Redlingshöfer, Andreas, 90619 Trautskirchen (DE)
(74) Vertreter: Kramer Barske Schmidtchen Patentanwälte PartG mbB

(56) Entgegenhaltungen:
- DE-A1-102010 048 801
- DE-T2- 69 920 330
- US-A- 5 938 320
- US-A- 6 152 590
- US-A1- 2011 001 428
- US-A1- 2012 206 790

## Beschreibung

Die vorliegende Erfindung betrifft eine Blinkereinheit für eine Einrichtung zur indirekten Sicht eines Fahrzeugs sowie eine Einrichtung zur indirekten Sicht mit einer solchen Blinkereinheit.

Als Einrichtung zur indirekten Sicht kommen beispielsweise Spiegeleinrichtungen in Betracht, wie Fahrzeugaußen- oder Fahrzeugseitenspiegel, aber auch Kameraarme, welche in ähnlicher Weise wie ein Fahrzeugseitenspiegel statt der Spiegelfläche ein Kameramodul aufweisen, das entsprechende Sichtbereiche rund um das Fahrzeug erfasst und im Fahrzeug an geeigneter Position für den Fahrer einsehbar darstellt. Solche Kameraarme können eine ähnliche Konstruktion und Gehäuse wie ein Seitenspiegel aufweisen und in ähnlicher Position am Fahrzeug angebracht sein.

Die Einrichtung zur indirekten Sicht weist gewöhnlich ein Gehäuse auf, in das neben der eigentlichen Einrichtung zur indirekten Sicht auch andere Funktionsbaugruppen als Funktionsbaugruppe integriert sein können. Beispielsweise kann ein Fahrtrichtungsanzeiger in das Gehäuse für die Einrichtung zur indirekten Sicht integriert sein. Ein solcher Fahrtrichtungsanzeiger oder Blinker am Seitenspiegel weist dabei oft neben einem gesetzlich vorgegebenen Bereich am Spiegel, in dem das Blinksignal sichtbar ist, bzw. einem um das Fahrzeug liegenden Umgebungsbereich, von dem das Blinksignal sichtbar sein soll, auch weitere Bereiche am Spiegel auf, in denen das Blinksignal erkennbar ist, was die Sicherheit für andere Verkehrsteilnehmer durch besseres Erkennen der Absicht des Fahrers erhöht. Das Verbreiten des Lichtsignals entlang einer Außenkontur des Spiegels wird oft durch das Vorsehen von mit einer Lichtquelle gekoppelten Lichtleitern erzielt.

Dabei ist es bekannt, die Blinkereinheit bzw. Fahrtrichtungsanzeigeeinheit als eine Funktionsbaueinheit mit einem eigenen Gehäuse auszugestalten und in das Gehäuse der Einrichtung zur indirekten Sicht zu integrieren. Eine weitere Funktionsbaueinheit, wie beispielsweise andere Umfeldleuchten, Temperatursensoren, Kameramodule oder Antennen, kann zusätzlich in das Gehäuse der Einrichtung zur indirekten Sicht integriert sein, ist jedoch in der Regel mittels eines eigenen, separaten Funktionseinheitsgehäuses in dieses integriert und nicht im Gehäuse des Blinkers bzw. Fahrtrichtungsanzeigers untergebracht.

Wenn die Blinkereinheit mit einer Lichtquelle und einem zugehörigen Lichtleiter ausgestaltet ist, kann der Lichtleiter gleichzeitig die Außenfläche des Blinkereinheitsgehäuses bilden, oder aber die Blinkereinheit kann mit einer Lichtquelle und einem Lichtleiter ausgestaltet sein, der hinter einer Lichtscheibe, die eine transparente Außenfläche des Gehäuses bildet, untergebracht ist. Die transparente Außenfläche, das heißt die Lichtscheibe, bildet in diesem Fall eine Außenfläche des Blinkereinheitsgehäuses.

Aus der DE 102 38 073 A1 ist eine Fahrzeugleuchte, insbesondere Seitenblinkleuchte zum Einbau in das Gehäuse eines Außenrückspiegels ersichtlich. Die Fahrzeugleuchte weist zumindest einen in dem Leuchtengehäuse angeordneten Lichtleiter auf, der sich von der Außenkante des Gehäuses des Außenrückspiegels im Wesentlichen horizontal zum Fahrzeug hin erstreckt und der das an einer zum Fahrzeug hinweisenden Stirnseite in ihn von zumindest einer Lichtquelle eingekoppelten Licht zu seiner gegenüberliegenden Stirnseite leitet und dort gemäß der gesetzlich geforderten Lichtverteilung im Wesentlichen entgegen und quer zur Fahrtrichtung des Fahrzeugs auskoppelt. Ferner ist eine zweite Lichtquelle vorgesehen, der zumindest ein optisches Bauelement zugeordnet ist, das als zweiter Lichtleiter ausgebildet ist, der im Wesentlichen hinter dem ersten Lichtleiter angeordnet ist und der das in ihn von einer zweiten Lichtquelle an einer zum Fahrzeug hinweisenden Stirnseite eingekoppelte Licht mittels Auskoppelelementen im Wesentlichen quer zu seiner Längserstreckung ausgekoppelt. Das aus dem zweiten Lichtleiter ausgekoppelte Licht durchstrahlt den ersten Lichtleiter.

Die DE 601 19 122 T2 betrifft einen Fahrzeugaußenspiegel mit mehreren auswechselbaren Signalen für Zwei-, Drei-, Vier- oder Mehrrad-Fahrzeuge.

Ein weiterer Fahrzeugaußenspiegel ist aus der US 5,938,320 A bekannt. Eine Spiegelbaugruppe weist ein Gehäuse auf, das eine Aussparung darin ausgebildet aufweist. Ein Spiegel ist in der Aussparung angeordnet. Der Spiegel leitet und reflektiert wenigstens einen Teil des darauf einfallenden Lichts. Ein Lichtleiter weist eine erste Fläche auf, die in einem vorgegebenen Abstand von der zweiten Fläche beabstandet ist. Der Lichtleiter ist innerhalb des Spiegelgehäuses angeordnet. Eine Vielzahl an Lichtquellen ist mit dem Lichtleiter gekoppelt und leitet Licht zwischen der ersten und der zweiten Fläche. Licht wird aus dem Lichtleiter hinaus reflektiert und durch den Spiegel geleitet zum Vorsehen einer Anzeigefunktion auf dem Spiegel.

Weitere Fahrzeugaußenspiegel sind aus der DE 699 20 330 T2 und der US 2011/0001428 A1 bekannt.

Davon ausgehend ist es Aufgabe der Erfindung, eine Blinkereinheit für eine Einrichtung zur indirekten Sicht eines Fahrzeugs vorzusehen, mit Hilfe derer weitere Funktionseinheiten einfach in die Einrichtung zur indirekten Sicht integriert werden können. Ferner ist es Aufgabe der Erfindung, eine entsprechende Einrichtung zur indirekten Sicht mit einer einfach in diese integrierten Blinkereinheit und weiteren Funktionseinheiten vorzusehen.

Diese Aufgabe wird mit einer Blinkereinheit mit den Merkmalen des Anspruchs 1 gelöst. Eine Einrichtung zur indirekten Sicht ist in Anspruch 12 vorgesehen. Vorteilhafte Ausführungsformen der Erfindung sind in den abhängigen Ansprüchen angegeben.

Der Erfindung liegt der Gedanke zugrunde, eine Blinkereinheit derart vorzusehen, dass in einem einzigen Gehäuse, durch das auch das von der Blinkereinheit zu erzeugende Licht austritt, zumindest eine weitere Funktionseinheit aufgenommen ist, so dass bei einer Integration der Blinkereinheit in die Einrichtung zur indirekten Sicht gleichzeitig die weitere Funktionseinheit in die Einrichtung zur indirekten Sicht integriert wird. Dabei ist unter einer Funktionseinheit jegliche Baugruppe zu verstehen, die eine am Fahrzeug benötigte Funktion bereitstellen kann, wie beispielsweise ein Temperatursensor, ein Kameramodul, Antennen, die beispielsweise für die Schließanlage geeignet sind, ein Heizmodul oder Ähnliches. Die Funktionen dieser Funktionseinheiten werden in der Regel durch sogenannte aktive elektrische oder elektronische Funktionsbauteile bereitgestellt, wobei unter einem aktiven Funktionsbauteil ein Bauteil zu verstehen ist, das in irgendeiner Form eine Verstärkerwirkung des Nutzsignals zeigt oder eine Steuerung erlaubt, wie beispielsweise Dioden, Transistoren, Optokoppler oder ein Relais. Die Funktion der Funktionseinheit kann aber auch durch ein passives Bauteil bereitgestellt werden. Passive Bauteile sind solche, die keine Verstärkerwirkung zeigen und keine Steuerungsfunktion besitzen, zum Beispiel Widerstände, Kondensatoren, Induktivitäten und Memristoren.

In jedem Fall wird unter dem Begriff Funktionseinheit jedwede Einheit verstanden, die nach außen, d.h. im Einbauzustand zur Fahrzeugumgebung bzw. zur Umgebung des Blinkereinheitsgehäuses, eine Funktion bereitstellt, wie z.B. eine visuelle oder akustische Anzeige, oder die von außen Information und/oder Daten empfängt, um diese zur Weiterverarbeitung im Fahrzeug bereitzustellen, wie z.B. Temperatur- oder Abstandssensoren, Antennen oder eine Kamera. Eine Funktion, wie eine Heizung mittels Heizplatine, die sich nur intern auf die im Blinkereinheitsgehäuse oder Spiegelgehäuse vorhandenen Komponenten auswirkt, soll somit nicht unter dem Begriff Funktionseinheit verstanden werden. Dabei ist unter dem Funktionsbauteil dasjenige Bauteil von ggf. einer Baugruppe aus mehreren elektrischen oder elektronischen Bauteilen zu verstehen, welches maßgeblich die Funktion erzeugt, z.B. eine Lampe oder Leuchte für die Blinkereinheit.

Somit wird erfindungsgemäß eine Blinkereinheit für eine Einrichtung zur indirekten Sicht eines Fahrzeugs vorgesehen, die in einem Funktionseinheitsgehäuse, in dem die Blinkereinheit integriert ist, mindestens einen darin aufgenommenen Elektronikträger enthält, der beispielsweise als Platine gebildet ist, wobei der mindestens eine Elektronikträger mindestens ein erstes elektrisches oder elektronisches Funktionsbauteil aufweist, das für die Erzeugung der Funktion des Blinkers verantwortlich ist, und ein zweites elektrisches oder elektronisches Funktionsbauteil aufweist, das eine weitere Funktion bereitstellt. Die weitere Funktion ist dabei jedwede Funktion außer einer Blinkerfunktion und einer Beleuchtungsfunktion, sondern jegliche Art von Nicht-Beleuchtungsfunktion. Das erste elektrische oder elektronische Funktionsbauteil und das zweite elektrische oder elektronische Funktionsbauteil sind im gemeinsamen Funktionseinheitsgehäuse der Blinkereinheit vorgesehen, das heißt in dem Gehäuse, durch das auch das Licht der Blinkereinheit zur Umgebung austritt, weiter vorzugsweise in einem gemeinsamen Bauraum, der nicht durch Strukturkomponenten geteilt ist, und können auf einem gemeinsamen Elektronikträger oder auf unterschiedlichen Elektronikträgern vorgesehen sein. Das erste und/oder das zweite elektrische oder elektronische Funktionsbauteil kann vorzugsweise ein aktives elektrisches oder elektronisches Bauteil sein.

Wird ein gemeinsamer Elektronikträger für das erste Funktionsbauteil und das zweite Funktionsbauteil verwendet, so ist dies im Hinblick auf eine kompakte räumliche Anordnung vorteilhaft, da zudem die Funktionsbauteile auch auf dem Elektronikträger in Abhängigkeit von dem Ort der Funktionseinheiten und deren Integration in das Funktionseinheitsgehäuse der Blinkereinheit angeordnet werden können, so dass eine räumlich optimale Anordnung sowohl der Funktionseinheiten, einschließlich der Blinkereinheit, als auch der Funktionsbauteile, welche die zugehörigen Funktionen erzeugen, im Funktionseinheitsgehäuse gewährleistet ist. Beispielsweise ist es vorteilhaft, wenn die zweite Funktion eine Zusatzbeleuchtung ist (nicht Teil der beanspruchten Erfindung), sowohl die Blinkereinheit als auch die Zusatzbeleuchtungseinheit im äußeren Bereich des Funktionseinheitsgehäuses anzuordnen und entsprechend auf dem Elektronikträger die zugehörigen Schaltungselemente bzw. Funktionsbauteile entsprechend zu gruppieren.

Durch die Integration mindestens einer weiteren Funktion zu der Blinkereinheit und in deren Gehäuse kann eine Kostenreduzierung, insbesondere bei der Montage der Blinkereinheit und der weiteren Funktionseinheiten am Fahrzeug, insbesondere der Einrichtung zur indirekten Sicht, erzielt werden, und ein Bauraum, der für die Funktionseinheiten benötigt wird, wird reduziert.

Der Elektronikträger, beispielsweise die Platine, nimmt dabei die aktiven und/oder passiven Funktionsbauteile und gegebenenfalls auch weitere Komponenten der Funktionseinheiten, einschließlich der Blinkereinheit auf. Für die Blinkereinheit ist beispielsweise eine Lichtquelle als Funktionsbauteil erforderlich, wie eine LED, Glühlampe, OLED, Röhren oder Ähnliches. Die weiteren Funktionseinheiten benötigen Komponenten wie beispielsweise ebenfalls LEDs (nicht Teil der beanspruchten Erfindung), Sensoren usw.

Zusätzlich ist auf dem Elektronikträger eine Schaltung integriert, welche die elektrische Leistung verteilt. Dazu können passive elektrische bzw. elektronische Bauteile, wie zum Beispiel Widerstände, vorgesehen sein. Diese stellen jedoch nicht maßgeblich nach außen eine Funktion bereit.

Nach einer besonders bevorzugten Ausführungsform können neben dem ersten und dem zweiten elektrischen oder elektronischen Funktionsbauteil noch weitere Funktionsbauteile vorgesehen sein, worunter man aktive oder passive elektrische oder elektronische Bauteile versteht. Durch diese Maßnahme können neben der Blinkerfunktion und einer zusätzlichen Funktion noch weitere Funktionen kompakt in das Funktionseinheitsgehäuse der Blinkereinheit integriert werden.

Nach einer bevorzugten Ausführungsform sind, beispielsweise zum Verteilen der Leistung, weitere passive elektrische Bauteile auf dem Elektronikträger vorgesehen. Diese können beispielsweise als gedruckte Schaltung auf die Platine bzw. den Elektronikträger aufgebracht sein. Unter dem Begriff Platine ist dabei eine Leiterplatte zu verstehen, die als ein Träger für elektronische Bauteile dient. Die Platine dient neben der mechanischen Befestigung auch der elektrischen Verbindung. Sie besteht vorzugsweise aus elektrisch isolierendem Material mit daran haftenden, leitenden Verbindungen.

Nach einer weiteren bevorzugten Ausführungsform enthält das erste elektrische oder elektronische Funktionsbauteil eine Lichtquelle, beispielsweise eine LED, Glühlampe, OLED, Röhren oder Ähnliches, die mit einem Lichtleiter gekoppelt ist, so dass Licht von der Lichtquelle in den Lichtleiter eingespeist werden kann. Der Lichtleiter leitet das Licht an die gewünschten Orte entlang des Funktionseinheitsgehäuses und gibt das Lichtsignal des Blinkers bzw. Fahrtrichtungsanzeigers zur Umgebung ab.

Dabei kann der Lichtleiter einen Teil der Außenfläche des Funktionseinheitsgehäuses bilden, oder aber er kann im Inneren des Funktionseinheitsgehäuses integriert sein, wobei dann zusätzlich eine Lichtscheibe in dem Funktionseinheitsgehäuse vorgesehen ist und vorzugsweise einen Teil der Oberfläche des Funktionseinheitsgehäuses bildet, durch welche der Lichtleiter Licht zur Umgebung abgibt.

Nach Bedarf kann ferner mindestens ein Lichtumlenkelement oder ein Lichtstreuelement vorgesehen sein, das mit der Lichtquelle und/oder dem Lichtleiter gekoppelt ist, um das von der Blinkereinheit abzugebende Licht nach Bedarf zu richten und zu streuen, so dass beispielsweise gesetzlich geforderte Ausleuchtbereiche des Fahrtrichtungsanzeigers erfüllt werden und von der Umgebung Licht sichtbar ist. Ein Lichtumlenkelement oder Streuelement kann auch vorgesehen sein, um das Licht in einen Lichtleiter einzuleiten.

Nach einer weiteren bevorzugten Ausführungsform kann das Funktionseinheitsgehäuse eine Öffnung aufweisen, durch die ein Funktionsgerät mit dem zweiten Funktionsbauteil verbindbar ist, beispielsweise ein zur Umgebung freigelegter Temperatursensor mit dem entsprechenden Steuerelement als Funktionsbauteil verbindbar ist, oder durch die eine Kamera als die zweite Funktionseinheit Aufnahmen der Umgebung machen kann. Die Öffnung kann dabei derart gestaltet sein, dass Staub- und/oder Wassereintritt in das Funktionseinheitsgehäuse verhindert wird.

Das Funktionseinheitsgehäuse an sich kann als geschlossenes Gehäuse gestaltet sein, das vorzugsweise staub- und/oder wasserdicht ist. Dadurch wird die Montage an einem Systemgehäuse der Einrichtung zur indirekten Sicht besonders einfach, da dann keine Dichtigkeitsanforderungen zu erfüllen sind, sondern vielmehr eine einfache mechanische Befestigung der Blinkereinheit am Systemgehäuse der Einrichtung zur indirekten Sicht genügt.

Alternativ kann die Blinkereinheit mit einem offenen Gehäuse ausgeführt sein, so dass beim Anbringen der Blinkereinheit am Systemgehäuse der Einrichtung zur indirekten Sicht das Funktionseinheitsgehäuse der Blinkereinheit durch Anlage an einer Oberfläche des Systemgehäuses ein geschlossenes Gehäuse bildet. In diesem Fall ist es jedoch häufig erforderlich, beim Anbringen des Funktionseinheitsgehäuses der Blinkereinheit eine Dichtung zu der Oberfläche des Systemgehäuses vorzusehen, so dass ebenfalls ein vorzugsweise staub- und/oder wasserdichter Bauraum entsteht, in dem der Elektronikträger mit den darauf aufgenommenen aktiven Funktionsbauteilen und passiven Bauteilen vorgesehen ist.

Nach einer erfindungemäßen Ausführungsform, die auch für andere Blinkereinheiten verwendet werden kann, die nicht alle Merkmale des Anspruchs 1 aufweisen, ist das Funktionseinheitsgehäuse derart gestaltet, dass es zumindest einen Bereich aus einem Werkstoff mit hoher Wärmeleitfähigkeit aufweist. Unter dem Begriff Werkstoff mit hoher Wärmeleitfähigkeit ist dabei ein Werkstoff zu verstehen, der eine Wärmeleitfähigkeit in der Größenordnung von mindestens der von metallischen Werkstoffen aufweist, also beispielsweise eine thermische Leitfähigkeit größer oder gleich 0,8 W/(cm-K) (bei 27° C) hat.

Erfindungemäß ist der Bereich aus einem Werkstoff mit hoher thermischer Leitfähigkeit aus einem Metall.

Der Bereich aus einem Werkstoff mit hoher Wärmeleitfähigkeit liegt dabei angrenzend bzw. in unmittelbarer Nachbarschaft zu dem Elektronikträger.

Durch das Vorsehen eines Bereichs mit hoher thermischer Leitfähigkeit im Funktionseinheitsgehäuse ist es möglich, die Wärme, die durch den Elektronikträger, der die gegebenenfalls stark Wärme erzeugenden ersten und zweiten elektrischen oder elektronischen Funktionsbauteile aufweist, einer guten Wärmeabfuhr zu unterwerfen, so dass die durch die elektrischen oder elektronischen Funktionsbauteile erzeugte Wärme zuverlässig zur Umgebung abgeführt werden kann. Dies ist insbesondere bedeutsam, da durch das zusätzliche Vorsehen eines zweiten elektrischen oder elektronischen Funktionsbauteils im Funktionseinheitsgehäuse eine höhere abzuführende Wärmemenge gegebenenfalls entsteht und so die Bauteile vor Versagen aufgrund von Überhitzung geschützt werden können.

Nach einer besonders bevorzugten Ausführungsform grenzt der Bereich mit hoher Wärmeleitfähigkeit direkt und unmittelbar an den Elektronikträger an, das heißt, ist mit ihm in Berührung. Dadurch kann die Wärme besonders effektiv zur Umgebung des Funktionseinheitsgehäuses abgeführt werden.

Alternativ liegt zwischen dem Elektronikträger und dem Funktionseinheitsgehäuse, insbesondere dessen Bereich mit hoher Wärmeleitfähigkeit, ein zusätzliches Wärmeleitpad, das sowohl den Elektronikträger als auch das Funktionseinheitsgehäuse im Bereich, der ein Material aufweist, das eine hohe Wärmeleitfähigkeit besitzt, berührt. Das Wärmeleitpad kann beispielsweise ein geeigneter Klebstoff oder eine andere Schicht mit hoher Wärmeleitfähigkeit

sein. Unter hoher Wärmeleitfähigkeit ist dabei wiederum mindestens eine Wärmeleitfähigkeit zu verstehen, die derjenigen des Bereichs mit hoher Wärmeleitfähigkeit gemäß der obigen Definition entspricht. Auch durch das Zwischenschalten eines Wärmeleitpads zwischen dem Elektronikträger und dem Bereich aus einem Werkstoff mit hoher Wärmeleitfähigkeit kann wiederum die Wärme, die im Inneren des Funktionseinheitsgehäuses durch die auf dem Elektronikträger vorgesehenen Funktionsbauteile erzeugt wird, gut zur Umgebung des Funktionseinheitsgehäuses abgeführt werden.

Erfindungsgemäß ist der Bereich aus einem Werkstoff mit hoher Wärmeleitfähigkeit auf einer Seite, die der Außenseite des Funktionseinheitsgehäuses entspricht, mit einer Wärmeabgabestruktur versehen. Diese Wärmeabgabestruktur ist in der Form von einem Wärmeleitpad mit besonders hoher Wärmeleitfähigkeit, das angepasst ist, über eine Flächenberührung mit einer Wärmeleitstruktur eines Systemgehäuses der Einrichtung für indirekte Sicht in Verbindung zu stehen. Durch das Vorsehen einer solchen Wärmeabgabestruktur kann noch effektiver die Wärme zur Umgebung des Funktionseinheitsgehäuses abgeführt werden.

Die Einrichtung zur indirekten Sicht ist vorzugsweise eine Spiegeleinrichtung, beispielsweise ein Seitenspiegel eines Fahrzeugs, oder eine Kameraeinrichtung.

Nachfolgend wird die Erfindung beispielhaft anhand der beigefügten Figuren beschrieben, in denen:
Fig. 1 eine perspektivische Ansicht einer erfindungsgemäßen Blinkereinheit ist;
Fig. 2 schematisch die Integration der Blinkereinheit aus Fig. 1 an einem Systemgehäuse einer Einrichtung zur indirekten Sicht sowie ein Blinkerfeld der Blinkereinheit zeigt;
Fig. 3 in entsprechender Darstellung zur Fig. 2 eine weitere Ausführungsform der erfindungsgemäßen Blinkereinheit zeigt;
Fig. 4 schematisch einen Elektronikträger der erfindungsgemäßen Blinkereinheit zeigt;
Fig. 5 in perspektivischer Ansicht einen Sichtkegel eines weiteren Funktionsbauteils, nämlich einer Kamera, aus der Blinkereinheit zeigt;
Fig. 6 in entsprechender Darstellung zu Fig. 2 noch eine weitere Ausführungsform der erfindungsgemäßen Blinkereinheit zeigt;
Fig. 7 eine weitere Ausführungsform der erfindungsgemäßen Blinkereinheit zeigt;
Fig. 8 eine Detailansicht einer nicht erfindungsgemäßen Wärmeleitstruktur für eine Blinkereinheit gemäß Fig. 7 zeigt; und
Fig. 9 eine erfindungsgemäße Ausführungsform für eine Wärmeleitstruktur für eine Blinkereinheit gemäß Fig. 7 zeigt.

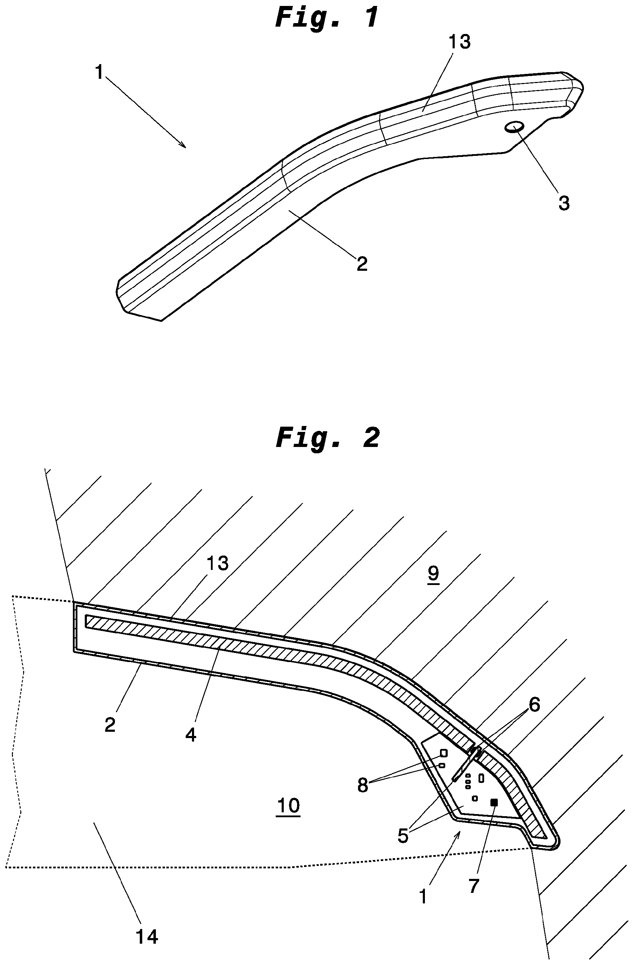

Fig. 1 zeigt in perspektivischer Ansicht eine erfindungsgemäße Blinkereinheit 1. Die Blinkereinheit 1 weist ein Funktionseinheitsgehäuse 2 (Blinkergehäuse) auf. Durch das Funktionseinheitsgehäuse 2 kann entlang eines Teils seiner Außenfläche oder entlang der gesamten Außenfläche von der Blinkereinheit erzeugtes Licht zur Umgebung des Fahrzeugs austreten.

Dazu ist bei der in Fig. 1 und 2 gezeigten Ausführungsform der Blinkereinheit 1 zumindest ein Teil des Funktionseinheitsgehäuses 2 mit einer lichtdurchlässigen Lichtscheibe 13 versehen. Alternativ kann auch das gesamte Funktionseinheitsgehäuse 2 bzw. zumindest derjenige Teil des Funktionseinheitsgehäuses 2, der zur Umgebung des Fahrzeugs freigelegt ist, nach Einbau in ein Systemgehäuse einer Einrichtung zur indirekten Sicht eine lichtdurchlässige, transparente Lichtscheibe 13 sein.

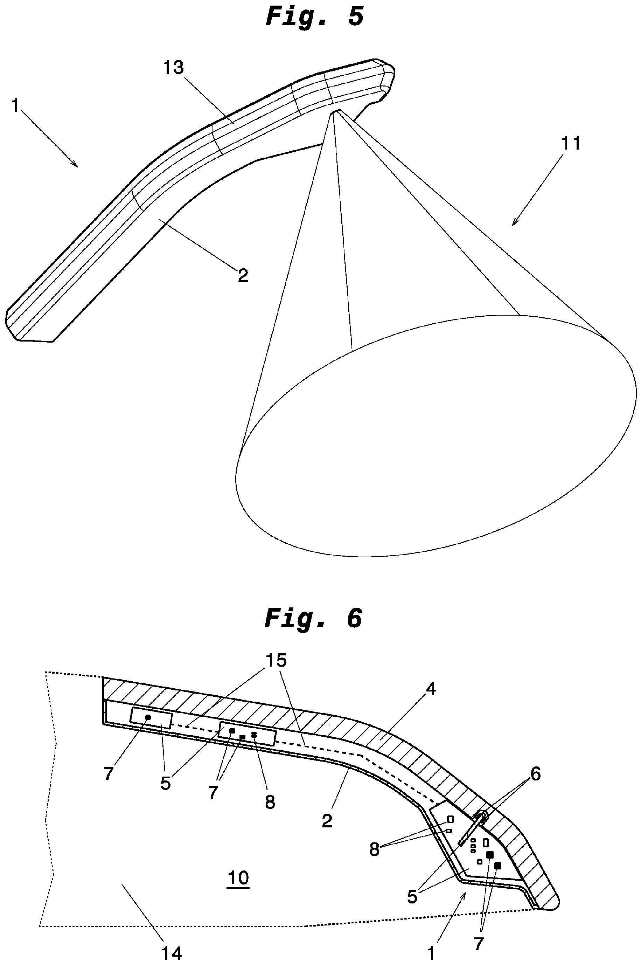

Das in Fig. 1 gezeigte Funktionseinheitsgehäuse 2 weist ferner eine Funktionsöffnung 3 auf. Durch diese Funktionsöffnung kann eine Verbindung zur Umgebung aus dem ansonsten im montierten Zustand in sich abgeschlossenen Funktionseinheitsgehäuse 2 hergestellt werden, so dass beispielsweise ein Temperatursensor die Umgebungstemperatur durch die Funktionsöffnung 3 erfassen kann, oder eine Kamera, die in das Funktionseinheitsgehäuse 2 integriert ist, aus der Funktionsöffnung 3 Aufnahmen machen kann, so dass sich, beispielsweise wie in Fig. 5 gezeigt, ein Sichtkegel 11 der Kamera aus der Funktionsöffnung 3 heraus erstreckt. Wenn durch die Funktionsöffnung 3 z.B. ein akustisches Signal nach außen abgegeben wird, entspricht der in Fig. 5 erkennbare Kegel einem Schallausbreitungskegel, bei einer Beleuchtung einem Lichtkegel usw.

Wie am besten in Fig. 2 zu erkennen ist, ist in der dargestellten Ausführungsform das Funktionseinheitsgehäuse 2 im montierten Zustand als ein abgeschlossenes Gehäuse gestaltet, das heißt, dass das Funktionseinheitsgehäuse 2 an sich staub- und wasserdicht sein kann. Dadurch werden die im Funktionseinheitsgehäuse 2 aufgenommenen Komponenten geschützt. Somit wird, wenn das Funktionseinheitsgehäuse 2, wie in Fig. 2 angedeutet, am Systemgehäuse 14 einer Einrichtung zur indirekten Sicht 10 montiert wird, lediglich eine einfache mechanische und eine elektrische Verbindung zur Halterung bzw. zum Anschluss der elektrischen Bauteile an die Fahrzeugstromversorgung und -steuerung benötigt. Es ist jedoch nicht erforderlich, für die Abdichtung des Funktionseinheitsgehäuses 2 gegenüber der es aufnehmenden Außenfläche des Systemgehäuses 14 der Einrichtung zur indirekten Sicht 10 zu sorgen.

In das Funktionseinheitsgehäuse 2, das in der in Fig. 2 dargestellten Ausführungsform eine Lichtscheibe 13 aufweist, durch die das von der Blinkereinheit erzeugte Licht in das Blinkerfeld 9 abgegeben wird, sind zwei längliche, sich entlang einer Längsrichtung einer Aufnahme im Systemgehäuse 14 der Einrichtung für indirekte Sicht erstreckende Lichtleiter 4, zwei Elektronikträger 5 und mehrere auf dem Elektronikträger 5 vorgesehene aktive und passive elektrische Bauteile 6, 7, 8 eingebracht. Der langgestreckte Lichtleiter 4 erstreckt sich dabei im Wesentlichen entlang der Außenfläche des Funktionseinheitsgehäuses 2, durch die das Licht zur Umgebung abgegeben werden soll.

In der dargestellten Ausführungsform ist ein Elektronikträger 5, das heißt eine Platine, vorgesehen, auf der als erstes aktives elektronisches Funktionsbauteil 6 eine Lichtquelle für die Blinkerfunktion angebracht ist. Die Lichtquelle kann beispielsweise eine LED, eine Glühlampe oder eine OLED sein. Die Lichtquelle ist auf dem Elektronikträger 5 so angeordnet, dass sie an einem Stirnende der Lichtleiter 4 Licht in Längsrichtung in diese einspeist. Das Licht kann am gegenüberliegenden Stirnende der Lichtleiter 4 und/oder entlang der Längsrichtung abgegeben werden.

Auf einer weiteren Platine 5 ist, wie es in Fig. 2 dargestellt ist, ein zweites aktives elektronisches Funktionsbauteil 7 vorgesehen. Dieses elektronische Funktionsbauteil 7 kann beispielsweise eine Antenne, eine Steuerung für eine Umfeldleuchte (nicht Teil der beanspruchten Erfindung), ein Kameramodul, ein

Heizmodul oder Ähnliches sein. Statt des aktiven ersten und zweiten Funktionsbauteils 6, 7 kann nach Bedarf eines der Funktionsbauteile 6, 7 oder beide als passives elektrisches oder elektronisches Funktionsbauteil gestaltet sein.

Zusätzlich sind auf den beiden Platinen 5 weitere passive elektrische Bauteile 8 vorgesehen. Die passiven elektrischen Bauteile 8 dienen hauptsächlich zum Verteilen der Leistung auf dem Elektronikträger 5 an das erste und zweite elektrische bzw. elektronische Funktionsbauteil 6, 7.

Statt der in Fig. 2 dargestellten zwei Elektronikträger 5 kann auch ein einziger Elektronikträger 5 vorgesehen sein und das erste und das zweite aktive elektrische oder elektronische Funktionsbauteil können auf diesem gemeinsamen Elektronikträger 5 angeordnet sein.

Bei entsprechender Stromzufuhr über die Schaltung, beispielsweise eine gedruckte Schaltung, auf dem Elektronikträger 5 wird die Lichtquelle als das erste elektronische Funktionsbauteil 6 aktiviert und Licht wird in den Lichtleiter 4 eingeleitet. Das in den Lichtleiter 4 eingeleitete Licht wird dann entlang des Lichtleiters durch die Lichtscheibe 13 des Funktionseinheitsgehäuses 2 an Auskoppelstellen für das Licht entlang des gesamten Lichtleiters 4 oder eines Teils des Lichtleiters 4 zur Umgebung zur Ausleuchtung des Blinkerfelds 9 abgegeben.

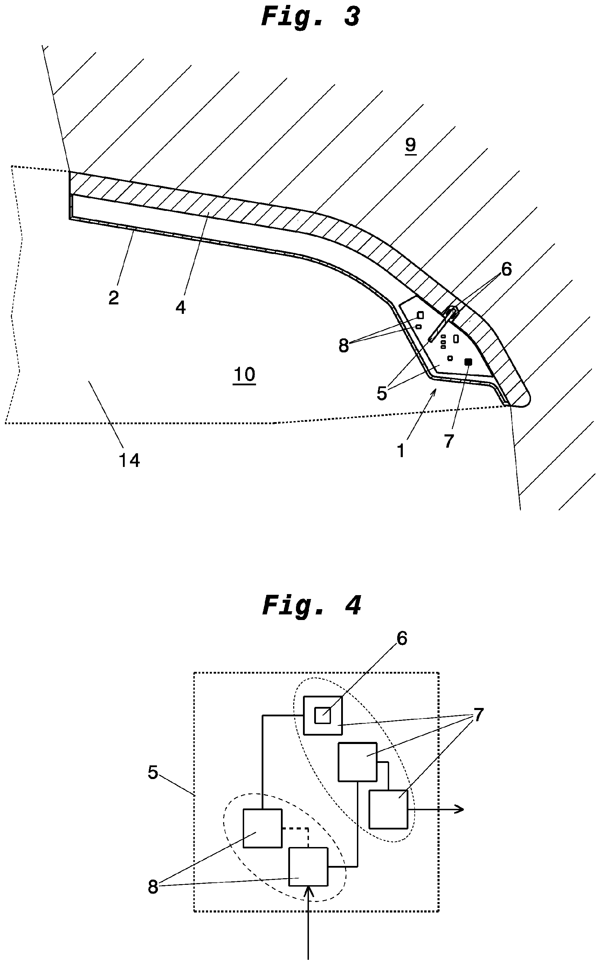

Fig. 3 zeigt eine alternative Ausführungsform für die in Fig. 2 dargestellte Blinkereinheit 1. Die Blinkereinheit 1 aus Fig. 3 unterscheidet sich von der vorher beschriebenen Blinkereinheit dadurch, dass nur ein einziger Lichtleiter 4 vorgesehen ist und der Lichtleiter 4 einen Teil der Außenfläche des Funktionseinheitsgehäuses 2 bildet und entsprechend keine Lichtscheibe 13 wie in Fig. 2 vorgesehen ist. Entsprechend ragt der Elektronikträger 5, auf dem das erste elektrische Funktionsbauteil angeordnet ist, das zum Erzeugen des Lichts für die Blinkerfunktion dient, in den Lichtleiter hinein, der jedoch nicht, wie in Fig. 2, geteilt in zwei Lichtleiter ist, sondern lediglich zur Aufnahme des Elektronikträgers 5 mit der Lampe als erstem aktiven elektronischen Funktionsbauteil 6 einen Hohlraum aufweist. Das heißt, der Lichtleiter 4 ist an der Einkoppelstelle für Licht in seiner Querschnittsgeometrie durch Formen einer Ausnehmung modifiziert, so dass Licht optimal in den Lichtleiter 4 eingeleitet werden kann. Die weiteren Bauteile und Ausgestaltungen sowie die Funktion sind entsprechend der in Verbindung mit Fig. 2 beschriebenen Ausführungsform und werden nicht nochmals beschrieben.

Darüber hinaus können, wie bei der Ausführungsform in Fig. 6 gezeigt ist, noch weitere Elektronikträger 5 (in Fig. 6 zwei zusätzliche Elektronikträger 5) vorgesehen sein, auf denen Funktionsbauteile 7 und/oder andere elektrische oder elektronische Bauteile 8 vorgesehen sind. Die Funktionsbauteile 7 können alle zum Bereitstellen der gleichen Funktion oder zum Bereitstellen unterschiedlicher Funktionen gebildet sein. Die Elektronikträger 5 sind über geeignete Leiter 15 verbunden. Die Funktionsbauteile 7 der weiteren Elektronikträger sind dabei an Orten in der unmittelbaren Umgebung, wo die jeweilige Funktion bereitgestellt werden soll, z.B. eine Temperatur erfasst werden soll, angeordnet.

In Fig. 4 ist schließlich ein Elektronikträger 5 mit darauf aufgenommenen Funktionsbauteilen 6, 7 sowie elektrischen Bauteilen 8 und einer aufgedruckten Schaltung schematisch dargestellt.

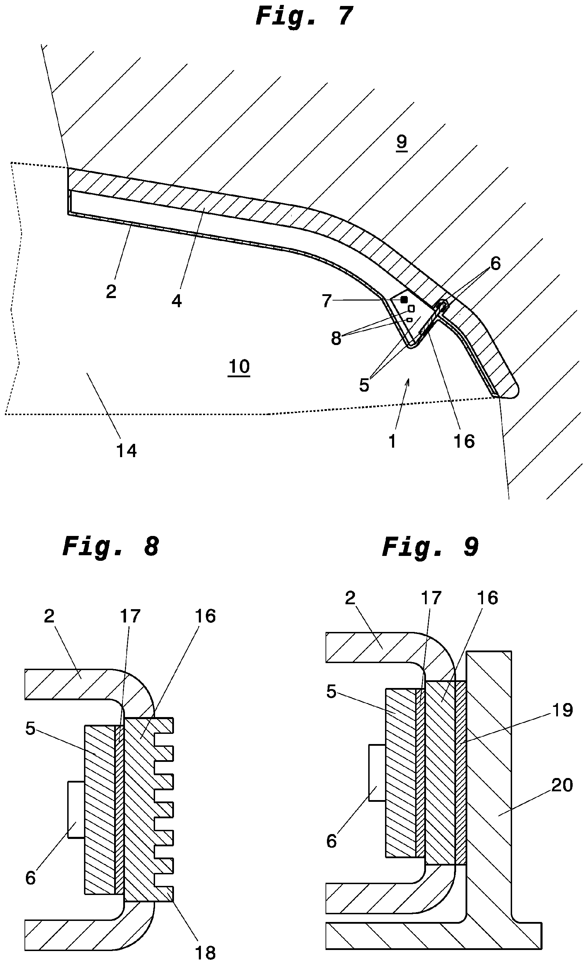

Fig. 7 zeigt eine weitere Ausführungsform der in Fig. 2 dargestellten Blinkereinheit 1. Die in Fig. 7 dargestellte Ausführungsform unterscheidet sich von der in Fig. 2 dargestellten Ausführungsform dadurch, dass das Funktionseinheitsgehäuse 2 mit einem Bereich 16 gestaltet ist, der aus einem Werkstoff gebildet ist, der eine hohe thermische Leitfähigkeit aufweist. Beispielsweise kann, wie in Fig. 7 gezeigt, ein Teilbereich 16 aus einem Werkstoff mit hoher thermischer Leitfähigkeit gebildet sein. Alternativ könnte auch das gesamte Funktionseinheitsgehäuse 2 aus einem Werkstoff mit hoher thermischer Leitfähigkeit gebildet sein. Beispielsweise ist der Bereich 16 dabei aus Metall gebildet. Wie in Fig. 7 gezeigt, liegt der Bereich 16, der aus einem Werkstoff mit hoher Wärmeleitfähigkeit gebildet ist, in unmittelbarer Nachbarschaft zu dem Elektronikträger 5, auf dem die elektronischen Funktionsbauteile 6, 7 angeordnet sind und somit die Hauptwärmequellen sind. Dadurch wird sichergestellt, dass die von den Funktionsbauteilen 6, 7 erzeugte Wärme gut zur Umgebung des Funktionseinheitsgehäuses 2 geleitet werden kann, und somit die Funktionsbauteile 6, 7 nicht überhitzen.

Um eine besonders gute Wärmeabgabe zur Umgebung des Funktionseinheitsgehäuses 2 sicherzustellen, grenzt der Bereich 16 aus einem Werkstoff mit hoher thermischer Leitfähigkeit unmittelbar an den Elektronikträger 5 oder zumindest einen der Elektronikträger 5 an. Nach Bedarf kann, wie es beispielsweise in Fig. 8 gezeigt ist, auch zwischen dem Elektronikträger 5 und dem Bereich 16 aus einem Werkstoff mit hoher thermischer Leitfähigkeit eine zusätzliche Schicht, die hervorragend Wärme leitet, beispielsweise ein Wärmeleitpad 17, aus einem entsprechenden Klebstoff, eingebracht sein. Durch das unmittelbare Angrenzen des Elektronikträgers 5 an den Bereich 16 aus einem Werkstoff mit hoher thermischer Leitfähigkeit bzw. durch den in Fig. 8 gezeigten thermischen Weg, der zwischen dem Elektronikträger 5 und dem Bereich 16 aus einem Werkstoff mit hoher thermischer Leitfähigkeit und dazwischenliegendes Wärmeleitpads 17 entsteht, kann Wärme effektiv zur Umgebung des Funktionseinheitsgehäuses 2 abgeführt werden, ohne dass beispielsweise ein verhältnismäßig schlecht wärmeleitender Luftspalt überwunden werden müsste. Dazu grenzt, wie in Fig. 8 gezeigt, das Wärmeleitpad 17 unmittelbar an den Elektronikträger 5 an, das heißt, berührt diesen über eine Fläche, und grenzt gleichzeitig, auf seiner dem Elektronikträger 5 abgewandten Seite, unmittelbar an den Bereich 16 aus einem Werkstoff mit hoher thermischer Leitfähigkeit an, das heißt, berührt diesen ebenfalls auf einer entsprechenden Fläche.

Wie es in der Ausführungsform gemäß Fig. 8 (die nicht Teil der beanspruchten Erfindung ist) gezeigt ist, kann auf der Außenseite des Bereichs 16 aus einem Werkstoff mit hoher Wärmeleitfähigkeit, das heißt, auf der der Umgebung des Funktionseinheitsgehäuses 2 zugewandten Seite, zusätzlich eine Wärmeabgabestruktur vorgesehen sein. Dazu sind in Fig. 8 auf der Au-ßenseite des Bereichs 16 aus einem Werkstoff mit hoher thermischer Wärmeleitfähigkeit Kühlrippen 18 geformt. Jede andere, die Oberfläche vergrößernde Maßnahme dieses Bereichs 16 kann entsprechend eingesetzt werden.

Als Alternative kann, wie es in Fig. 9 gezeigt ist, ein weiteres Wärmeleitpad 19 angrenzend an den Bereich 16 aus einem Werkstoff mit hoher thermischer Leitfähigkeit auf der Außenseite des Funktionseinheitsgehäuses 2 vorgesehen sein. Dieses Wärmeleitpad 19, das flächig den Bereich 16 aus einem Werkstoff mit hoher thermischer Leitfähigkeit berührt, kann auf seiner dieser Flächenberührung gegenüberliegenden Seite beispielsweise in Flächenberührung mit einer Wärmeleitstruktur 20 des Systemgehäuses 14 der Einrichtung zur indirekten Sicht sein. Beispielsweise kann die Wärmeleitstruktur 20 ein aus Druckgussmaterial geformter Arm zur Montage des Funktionseinheitsgehäuses 2 am Systemgehäuse 14 sein.

Die in Figuren 7, 8 und 9 beschriebenen in das Funktionseinheitsgehäuse 2 integrierten Wärmeabgabestrukturen von Wärme, die im Inneren des Funktionseinheitsgehäuses 2 erzeugt wird, zur Umgebung des Funktionseinheitsgehäuses 2 können auch auf andere Funktionseinheitsgehäuse 2 für Blinkereinheiten oder andere Funktionseinheiten, die an einem Fahrzeugaußenspiegel oder an einem Kameraarm bzw. einer anderen Einrichtung zur indirekten Sicht anzubringen sind, angewendet werden, ohne dass notwendigerweise alle Merkmale, die in den Ausführungsformen beschrieben wurden, vorgesehen sein müssen. Insbesondere können diese Wärmeabgabestrukturen auch auf Funktionseinheitsgehäuse angewendet werden, bei denen nicht notwendigerweise zwei verschiedene elektrische oder elektronische Funktionsbauteile in einem gemeinsamen Funktionseinheitsgehäuse integriert sind, wobei eines von den elektrischen oder elektronischen Funktionsbauteilen eine Blinkerfunktion bereitstellt.

### Bezugszeichenliste

- 1: Blinkereinheit
- 2: Funktionseinheitsgehäuse
- 3: Funktionsöffnung
- 4: Lichtleiter
- 5: Elektronikträger
- 6: erstes elektrisches oder elektronisches Funktionsbauteil
- 7: zweites elektrisches oder elektronisches Funktionsbauteil
- 8: passives elektrisches Bauteil
- 9: Blinkerfeld
- 10: Einrichtung für indirekte Sicht
- 11: Sichtkegel
- 13: Lichtscheibe
- 14: Systemgehäuse
- 15: Leiter
- 16: Bereich aus Werkstoff mit hoher Wärmeleitfähigkeit
- 17: Wärmeleitpad
- 18: Kühlrippen
- 19: Wärmeleitpad
- 20: Wärmeleitstruktur

## Patentansprüche

1. Blinkereinheit (1) für eine Einrichtung zur indirekten Sicht (10) eines Fahrzeugs, mit einem an einem Systemgehäuse (14) der Einrichtung zur indirekten Sicht (10) montierbaren Blinkergehäuse (2),
mindestens einem im Blinkergehäuse (2) aufgenommenen Elektronikträger (5) und einem im Blinkergehäuse (2) aufgenommenen Lichtleiter (4),
wobei der mindestens eine Elektronikträger (5) mindestens ein erstes elektrisches oder elektronisches Funktionsbauteil (6) und ein zweites elektrisches oder elektronisches Funktionsbauteil (7) aufweist, wobei das erste Funktionsbauteil (6) eine mit dem Lichtleiter (4) gekoppelte Lichtquelle als Teil eines Fahrtrichtungsanzeigers aufweist und das zweite Funktionsbauteil (7) eine Nicht-Beleuchtungsfunktion bereitstellt, und
wobei das Blinkergehäuse (2) zumindest einen Bereich (16) aus einem Werkstoff mit hoher Wärmeleitfähigkeit aufweist, wobei der Bereich (16) aus einem Werkstoff mit hoher Wärmeleitfähigkeit angrenzend an den Elektronikträger (5) positioniert ist,
wobei der Bereich (16) aus einem Material mit hoher Wärmeleitfähigkeit auf seiner der Gehäuseaußenseite des Blinkergehäuses (2) entsprechenden Fläche mit einer Wärmeabgabestruktur (18, 19) versehen ist,
wobei die Wärmeabgabestruktur ein Wärmeleitpad (19) ist, das angepasst ist, über eine Flächenberührung mit einer Wärmeleitstruktur eines Systemgehäuses (14) der Einrichtung für indirekte Sicht (10) in Verbindung zu stehen.

2. Blinkereinheit (1) nach Anspruch 1, wobei das erste Funktionsbauteil (6) und das zweite Funktionsbauteil (7) auf einem gemeinsamen Elektronikträger angeordnet sind.

3. Blinkereinheit (1) nach einem der vorhergehenden Ansprüche, wobei der Elektronikträger (5) ein oder mehrere weitere Funktionsbauteile (6,7) aufweist.

4. Blinkereinheit (1) nach einem der vorhergehenden Ansprüche, wobei der Elektronikträger (5) mindestens ein passives elektrisches Bauteil (8) aufweist.

5. Blinkereinheit (1) nach einem der vorhergehenden Ansprüche, wobei mindestens ein Lichtumlenkelement und/oder ein Lichtstreuelement vorgesehen ist, das mit der Lichtquelle und/oder dem Lichtleiter (4) gekoppelt ist.

6. Blinkereinheit (1) nach einem der vorhergehenden Ansprüche,
wobei der Lichtleiter (4) Teil der Außenfläche des Blinkergehäuses (2) ist, und/oder wobei das Blinkergehäuse (2) eine Lichtscheibe (13) enthält, durch die Licht von dem Fahrtrichtungsanzeiger austreten kann.

7. Blinkereinheit (1) nach Anspruch 6, wobei das Blinkergehäuse (2) eine Öffnung aufweist, durch die ein Funktionsgerät mit dem zweiten Funktionsbauteil (7) verbindbar ist oder durch die das zweite Funktionsbauteil (7) mit der Umgebung interagiert.

8. Blinkereinheit (1) nach einem der vorhergehenden Ansprüche, wobei das Blinkergehäuse (2) ein geschlossenes Gehäuse ist, das vorzugsweise staub- und/oder wasserdicht ist.

9. Blinkereinheit (1) nach einem der Ansprüche 1 bis 7, wobei das Blinkergehäuse (2) ein offenes Gehäuse ist, das angepasst ist, beim Anbringen an einem Systemgehäuse (14) der Einrichtung zur indirekten Sicht (10) mit einer Oberfläche des Systemgehäuses einen abgeschlossenen Bauraum zu bilden.

10. Blinkereinheit (1) nach einem der vorhergehenden Ansprüche, wobei das erste und/oder das zweite Funktionsbauteil (6, 7) ein aktives Funktionsbauteil ist.

11. Blinkereinheit (1) nach Anspruch 10,
wobei zwischen dem Elektronikträger (5) und dem Bereich (16) aus einem Material mit hoher Wärmeleitfähigkeit ein Wärmeleitpad (17) eingebracht ist und der Elektronikträger (5) in Flächenberührung mit dem Wärmeleitpad (17) ist und das Wärmeleitpad (17) in Flächenberührung mit dem Bereich (16) aus einem Material mit hoher Wärmeleitfähigkeit ist, oder
wobei der Elektronikträger (5) den Bereich (16) aus einem Material mit hoher Wärmeleitfähigkeit unmittelbar berührt.

12. Einrichtung zur indirekten Sicht (10) mit einer Blinkereinheit (1) nach einem der vorhergehenden Ansprüche.

13. Einrichtung zur indirekten Sicht (10) nach Anspruch 12, weiter enthaltend eine Spiegeleinrichtung oder eine Kameraeinrichtung.

## Claims

1. An indicator unit (1) for a system for indirect vision (10) of a vehicle, comprising an indicator housing (2) mountable to a system housing (14) of the system for indirect vision (10),
at least one electronic carrier (5) accommodated in the indicator housing (2), and an optical guide (4) accommodated in the indicator housing (2),
wherein the at least one electronic carrier (5) comprises at least one first electric or electronic functional component (6) and a second electric or electronic functional component (7), wherein the first functional component (6) comprises a light source coupled to the optical guide as part of a direction indicator and the second functional component (7) provides a function other than a lighting function, and
wherein the indicator housing (2) comprises at least one portion made of a material with high thermal conductivity, wherein the portion (16) made of a material with high thermal conductivity is positioned adjacent to the electronic carrier (5),
wherein the portion (16) made of a material with high thermal conductivity is provided with a heat dissipation structure (18, 19) on the surface corresponding to the housing outer side of indicator housing (2),
wherein the heat dissipation structure is a thermally conductive pad (19) which is configured to be in communication with a thermally conductive structure (20) of a system housing (14) of the system for indirect vision via a surface contact.

2. The indicator unit (1) according to claim 1, wherein the first functional component (6) and the second functional component (7) are arranged on a common electronic carrier.

3. The indicator unit (1) according to one of the preceding claims, wherein the electronic carrier (5) comprises one or more further functional components (6, 7).

4. The indicator unit (1) according to one of the preceding claims, wherein the electronic carrier (5) comprises at least one passive electric component (8).

5. The indicator unit (1) according to one of the preceding claims, wherein at least one light deflecting component and/or light diffusing component which is/are coupled to the light source and/or the optical guide (4) is/are provided.

6. The indicator unit (1) according to one of the preceding claims,
wherein the optical guide (4) is part of the outer surface of the indicator housing (2), and/or
wherein the indicator housing (2) comprises a lens (13) through which light emitted by the direction indicator can escape.

7. The indicator unit (1) according to claim 6, wherein the indicator housing (2) comprises an opening, through which opening a functional device is connectable to the second functional component (7), or through which opening the second functional component (7) interacts with the environment.

8. The indicator unit (1) according to one of the preceding claims, wherein the indicator housing (2) is a closed preferably dust-proof and/or waterproof housing.

9. The indicator unit (1) according to one of claims 1 to 7, wherein the indicator housing (2) is an open housing which is configured to form a closed installation space together with a surface of the system housing during attaching to a system housing (14) of the system for indirect vision.

10. The indicator unit (1) according to one of the preceding claims, wherein the first and/or second functional component (6, 7) is an active functional component.

11. The indicator unit (1) according to claim 10,
wherein a thermally conductive pad (17) is interposed between the electronic carrier (5) and the portion (16) made of a material with high thermal conductivity and the electronic carrier (5) is in surface contact with the thermally conductive pad (17) and the thermally conductive pad (17) is in surface contact with the portion (16) made of a material with high thermal conductivity, or
wherein the electronic carrier (5) directly contacts the portion (16) made of a material with high thermal conductivity.

12. A system (10) for indirect vision comprising an indicator unit (1) according to one of the preceding claims.

13. The system (10) for indirect vision according to claim 12, further comprising a mirror system or a camera system.

## Revendications

1. Unité de clignotant (1) pour un appareil de vue indirecte (10) d'un véhicule, présentant un boîtier de clignotant (2) pouvant être monté sur un boîtier système (14) de l'appareil de vue indirecte (10),
au moins un support électronique (5) logé dans le boîtier de clignotant (2) et un conducteur de lumière (4) logé dans le boîtier de clignotant (2),
dans laquelle le au moins un support électronique (5) comporte au moins un premier composant fonctionnel électrique ou électronique (6) et un second composant fonctionnel électrique ou électronique (7), dans laquelle le premier composant fonctionnel (6) présente une source de lumière couplée au conducteur de lumière (4) en tant que partie d'un feu indicateur de direction et le second composant fonctionnel (7) assure une fonction sans éclairage, et
dans laquelle le boîtier de clignotant (2) présente au moins une région (16) formée d'un matériau à conductivité thermique élevée, la région (16) formée d'un matériau à conductivité thermique élevée étant positionnée adjacente au support électronique (5),
dans laquelle la région (16) formée d'un matériau à conductivité thermique élevée est munie sur sa surface correspondant à la face extérieure de boîtier du boîtier de clignotant (2) d'une structure à émission de chaleur (18, 19),
dans laquelle la structure à émission de chaleur est un pad thermique (19) qui est adapté pour être relié, via un contact de surface, à une structure à conduction thermique d'un boîtier système (14) de l'appareil de vue indirecte (10).

2. Unité de clignotant (1) selon la revendication 1, dans laquelle le premier composant fonctionnel (6) et le second composant fonctionnel (7) sont agencés sur un support électronique commun.

3. Unité de clignotant (1) selon l'une des revendications précédentes, dans laquelle le support électronique (5) présente un ou plusieurs autres composants fonctionnels (6, 7).

4. Unité de clignotant (1) selon l'une des revendications précédentes, dans laquelle le support électronique (5) présente au moins un composant électrique passif (8).

5. Unité de clignotant (1) selon l'une des revendications précédentes, dans laquelle est prévu au moins un élément de déviation de lumière et/ou un élément de diffusion de lumière, lequel est couplé à la source de lumière et/ou au conducteur de lumière (4).

6. Unité de clignotant (1) selon l'une des revendications précédentes, dans laquelle le conducteur de lumière (4) fait partie de la surface extérieure du boîtier de clignotant (2), et/ou dans laquelle le boîtier de clignotant (2) contient une glace de diffusion (13) à travers laquelle peut s'échapper la lumière du feu indicateur de direction.

7. Unité de clignotant (1) selon la revendication 6, dans laquelle le boîtier de clignotant (2) présente une ouverture à travers laquelle un appareil fonctionnel peut être relié au second composant fonctionnel (7) ou à travers laquelle le second composant fonctionnel (7) interagit avec l'environnement.

8. Unité de clignotant (1) selon l'une des revendications précédentes, dans laquelle le boîtier de clignotant (2) est un boîtier fermé qui est de préférence étanche à la poussière et/ou à l'eau.

9. Unité de clignotant (1) selon l'une des revendications 1 à 7, dans laquelle le boîtier de clignotant (2) est un boîtier ouvert qui est adapté pour former, lors de la mise en place sur un boîtier système (14) de l'appareil de vue indirecte (10), un espace d'installation fermé avec une surface du boîtier système.

10. Unité de clignotant (1) selon l'une des revendications précédentes, dans laquelle le premier et/ou le second composant fonctionnel (6, 7) est un composant fonctionnel actif.

11. Unité de clignotant (1) selon la revendication 10,
dans laquelle un pad thermique (17) est inséré entre le support électronique (5) et la région (16) formée d'un matériau à conductivité thermique élevée, et le support électronique (5) est en contact de surface avec le pad thermique (17), et le pad thermique (17) est en contact de surface avec la région (16) formée d'un matériau à conductivité thermique élevée, ou
dans laquelle le support électronique (5) entre directement en contact avec la région (16) formée d'un matériau à conductivité thermique élevée.

12. Appareil de vue indirecte (10) doté d'une unité de clignotant (1) selon l'une des revendications précédentes.

13. Appareil de vue indirecte (10) selon la revendication 12, contenant de plus un appareil de miroir ou un appareil de caméra.
